# DEMANDE DE BREVET EUROPEEN

(11) **EP 4 807 713 A1**
(43) Date de publication de la demande: **16.09.2026**
(21) Numéro de dépôt: 26164202.9
(22) Date de dépôt: 12.03.2026
(51) Int. Cl.: G08G 5/21, G08G 5/53, G08G 5/74, G08G 5/80, G01C 21/00, G01C 23/00

(54) **RÉDUCTION DE LA TAILLE D'UNE BASE DE DONNÉES D'OBSTACLES POUR AÉRONEF**

(30) Priorité: 13.03.2025 FR 2502505
(71) Demandeur: THALES, 92190 Meudon (FR)
(72) Inventeur: DEMOMENT, Ronan, 31100 TOULOUSE (FR); WACHTER, Mathieu, 31100 TOULOUSE (FR); BOSQUET, Thomas, 31100 TOULOUSE (FR); BIGOU, Lise, 31100 TOULOUSE (FR); MOUSSA, Nahor, 31100 TOULOUSE (FR)
(74) Mandataire: Lavoix

(57) **Abrégé**

La présente invention concerne un procédé (30) de réduction de la taille d'une base de données d'obstacles pour aéronef, comprenant les étapes suivantes :
- acquisition (32) d'une base initiale de données d'obstacles comprenant un nombre initial Nᵢₙᵢₜ d'obstacles associé à une zone prédéterminée ;
- pour ladite zone prédéterminée, obtention (34) d'une valeur maximale Nₘₐₓ d'obstacles associée à une capacité de traitement de données ;
et jusqu'à ce que le nombre courant N d'obstacles soit égal à Nₘₐₓ, avec Nₘₐₓ ≤ N ≤ Nᵢₙᵢₜ, réitération des étapes suivantes :
- pour chaque obstacle desdits N obstacles courants, détermination (40) d'un score de dangerosité dudit obstacle considéré,
- au sein desdits N obstacles, suppression (42) de l'obstacle ayant le score de dangerosité le plus faible, la valeur de N étant, simultanément ou successivement à ladite suppression, décrémentée de un.

## Description

La présente invention concerne un procédé de réduction de la taille d'une base de données d'obstacles pour aéronef, la base de donnée d'obstacles étant configurée pour être utilisée par un système avionique, chaque obstacle étant modélisé par un cylindre, vertical par rapport au sol, défini par son rayon, sa hauteur, et l'altitude de sa surface supérieure, le procédé étant mis en œuvre par un dispositif électronique de réduction.

L'invention concerne également un programme d'ordinateur comportant des instructions logicielles qui, lorsqu'elles sont exécutées par un ordinateur, mettent en œuvre un tel procédé de réduction de la taille d'une base de données d'obstacles pour aéronef.

L'invention concerne aussi un support informatique lisible par ordinateur, comprenant une base de données obstacles pour un aéronef, la taille de la base de données d'obstacles ayant été réduite via un tel procédé de réduction.

L'invention concerne également dispositif électronique de réduction de la taille d'une base de données d'obstacles pour aéronef, le dispositif électronique étant configuré pour mettre en œuvre un tel procédé de réduction de la taille d'une base de données d'obstacles pour aéronef.

L'invention concerne le domaine de la modélisation d'obstacles ou de points d'intérêts dans une base de donnée géographique pour aéronef. De telles bases de données sont par la suite appelées bases de données d'obstacles pour aéronef et sont utilisées par des systèmes avioniques, en particulier par des systèmes de prévention et d'alerte des risques de collision des aéronefs avec des obstacles.

Chaque base de données d'obstacles est alors par exemple incluse dans le système avionique, tel que le système de prévention et d'alerte ; ou encore stockée sur un support informatique relié au système avionique, tel que le système de prévention et d'alerte.

Autrement dit, les domaines d'application sont ceux des applications aéronautiques embarquées que ce soit dans une fonction de prévention (de l'anglais *awarness*) et/ou d'alerte (de l'anglais *alerting*)*,* les systèmes de vision synthétique SVS (de l'anglais *Synthetic Vision Systems*)*,* ou encore des applications informatiques PC (de l'anglais *Personal Computer)*/*Web* d'affichage cartographique DMAP (de l'anglais *digital map,* i.e. carte de terrain numérisée).

En particulier, on connaît des systèmes d'alerte et de prévention du terrain pour avion, également appelés TAWS (de l'anglais *Terrain Awareness and Warning System*)*,* ainsi que des systèmes d'alerte et de prévention du terrain pour hélicoptère, également appelés HTAWS (de l'anglais *Helicopter TAWS*)*.*

Ces systèmes avioniques sont obligatoires pour les avions de lignes, de transport et régionaux et le deviennent pour les hélicoptères. Dans l'aviation civile, les systèmes de protection du Terrain et des Obstacles (TAWS) utilisent des bases de données d'obstacles construites à partir de sources diverses et variées, souvent étatiques.

Ces sources peuvent énormément varier en qualité, en quantité et dans la manière dont sont modélisés les obstacles. Toutes partagent néanmoins une caractéristique commune : au fil du temps, avec l'amélioration constante de l'efficacité des technologies pour identifier les obstacles, ces bases de données d'obstacles utilisées en aéronautique ne cessent de croitre en volume, le nombre d'obstacles augmentant parfois de manière exponentielle, certaines zones pouvant comprendre un nombre d'obstacles dépassant le millier d'obstacles au kilomètre carré.

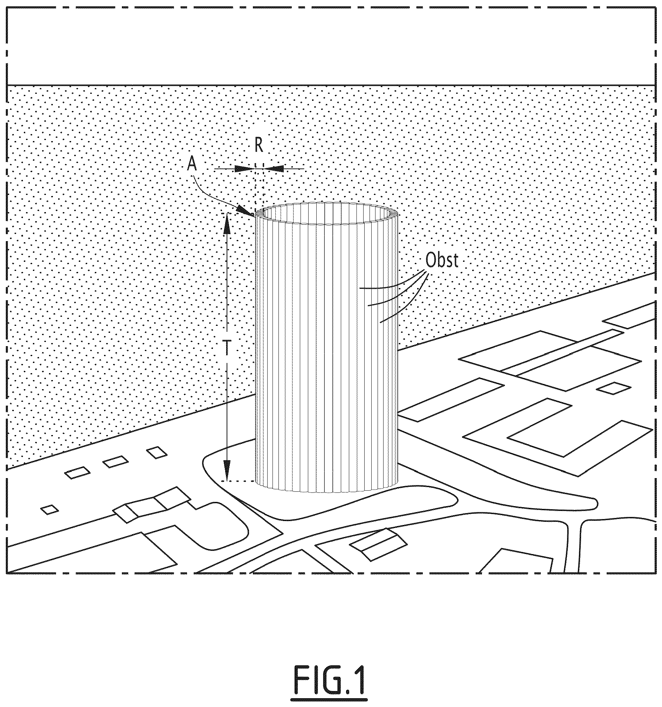

De plus, la manière dont certains obstacles sont modélisés aggrave ce phénomène en utilisant, par exemple, tel qu'illustré par la figure 1 plusieurs dizaines d'obstacles virtuels pour représenter une seule éolienne ou une seule tour, chaque obstacle Obst étant modélisé par un cylindre, vertical par rapport au sol, défini par son rayon R, sa hauteur H, et l'altitude A de sa surface supérieure (i.e. l'altitude du point le plus haut), sa position en latitude et longitude étant par ailleurs également stockée au sein de la base donnée.

Si les solutions futures pourront peut-être être adaptées à cette croissance, les solutions existantes, déjà déployées et certifiées, doivent nécessairement utiliser des bases de taille réduite.

Par exemple, les TAWS embarqués dans les flottes d'avion civiles ont parfois 20 ans d'âge et ne peuvent traiter un tel volume de données, or la sureté passe par la mise à jour régulière de ces données. Les TAWS en exploitation sont souvent limités à quelques centaines d'obstacles pour un rayon de plusieurs kilomètres autour de l'aéronef. Le dépassement de cette limite entraîne la dégradation, voire le dysfonctionnement du système avionique. Notons qu'un filtrage basé sur la hauteur ou l'altitude uniquement (conservation des obstacles les plus hauts) n'a pas de « sens aéronautique » car il ne tient pas compte de la répartition géographique de ceux-ci.

Il existe des techniques basées sur des algorithmes permettant de réduire le nombre et la densité d'obstacles dans une zone en les analysant et en les fusionnant ou les englobant sur des critères opérationnels. Ces algorithmes sont capables d'identifier des modifications qui vont toujours dans le sens de la sécurité par exemple en remplaçant un groupe d'obstacles proches par un unique obstacle les englobant. Ils ont néanmoins un défaut dans la mesure où ils ne peuvent garantir à l'avance le nombre d'obstacles qu'ils pourront supprimer et de ce fait, le nombre maximum d'obstacles de la base de données.

Si un certain nombre de critères opérationnels simples pourraient être envisagés pour réduire le nombre d'obstacles, rien ne permet d'atteindre une valeur maximum définie à l'avance.

D'autres solutions existantes traitent de la problématique de filtrage des obstacles, et le font du point de vue de l'aéronef mais en vol, à un instant t pour ne considérer à ce seul instant que ceux qui sont significatifs en terme de sureté, si bien qu'elles ne fournissent pas de solution de réduction, en tant que telle et effective, de la taille de la base de donnée propre à être embarquée au sein de l'aéronef.

Autrement dit, aucune des solutions existantes ne traite la problématique des tailles de base de données et de la limitation, avant vol, de leur densité et par conséquent du nombre d'obstacles qu'elles contiennent, pour ne pas dépasser les capacités des calculateurs des systèmes avioniques embarqués.

Le but de l'invention est alors de proposer une solution propre à garantir que le nombre maximum d'obstacles ne dépasse pas une valeur prédéfinie, quelle qu'elle soit.

A cet effet, l'invention a pour objet un procédé de réduction de la taille d'une base de données d'obstacles pour aéronef, la base de donnée d'obstacles étant configurée pour être utilisée par un système avionique, chaque obstacle étant modélisé par un cylindre, vertical par rapport au sol, défini par son rayon, sa hauteur, et l'altitude de sa surface supérieure, le procédé étant mis en oeuvre par un dispositif électronique de réduction, et comprenant les étapes suivantes :
- acquisition d'une base initiale de données d'obstacles, la base initiale de données obstacles comprenant un nombre initial Nᵢₙᵢₜ d'obstacles associé à une zone géographique prédéterminée ;
- pour ladite zone géographique prédéterminée, obtention d'une valeur maximale prédéterminée Nₘₐₓ d'obstacles associée à la capacité de traitement de données dudit système avionique ;

et jusqu'à ce que le nombre courant N d'obstacles de ladite base de données d'obstacles soit égal à ladite valeur maximale prédéterminée Nₘₐₓ d'obstacles, avec Nₘₐₓ ≤ N ≤ Nᵢₙᵢₜ, réitération des étapes suivantes :
   - pour chaque obstacle desdits N obstacles courants, détermination d'un score de dangerosité dudit obstacle considéré, ledit score de dangerosité dudit obstacle considéré correspondant au minimum des valeurs de dangerosité obtenues pour ledit obstacle considéré par rapport à chaque autre obstacle desdits N-1 obstacles distincts dudit obstacle considéré, chaque valeur de dangerosité associée à un couple d'obstacles comprenant ledit obstacle considéré et un autre obstacle desdits N-1 obstacles dépendant au moins de :
      - la distance entre ledit obstacle considéré et ledit autre obstacle dudit couple ;
      - les altitudes et les rayons respectifs des obstacles dudit couple,
   - au sein desdits N obstacles, suppression de l'obstacle ayant le score de dangerosité le plus faible, la valeur de N étant, simultanément ou successivement à ladite suppression, décrémentée de un,
et une fois que le nombre courant N d'obstacles de ladite base de données d'obstacles est égal à ladite valeur maximale prédéterminée Nₘₐₓ d'obstacles, obtention de la base de données d'obstacles de taille réduite propre à être ensuite embarquée au sein dudit système avionique.

Ainsi, le procédé de réduction de la taille d'une base de données d'obstacles pour aéronef selon la présente invention, propose de supprimer des obstacles, pas à pas (i.e. obstacle par obstacle, un seul obstacle étant supprimé à chaque itération), en minimisant l'impact de cette suppression sur la sécurité du vol, c'est-à-dire en supprimant les obstacles les moins dangereux d'un point de vue opérationnel.

En effet, la présente invention permet de réduire le nombre d'obstacle à une valeur stricte en ne gardant que les obstacles les plus dangereux, les moins dangereux étant supprimés.

Autrement dit, la présente invention propose de limiter la densité d'obstacles à une valeur exacte donnée correspondant à la limite acceptable par le système avionique (ou par l'application avionique) propre à exploiter la base de données d'obstacles, dans une zone déterminée.

La présente invention permet de répondre aux exigences selon lesquelles la limite maximale d'obstacles, définie par la capacité de traitement du système avionique concerné ne sera jamais dépassée. De plus, par rapport aux techniques existantes précitées basées sur des algorithmes permettant de réduire le nombre et la densité d'obstacles dans une zone en les analysant et en les fusionnant ou les englobant sur des critères opérationnels, la présente invention supprime uniquement les obstacles les moins dangereux pour un aéronef, quelle que soit sa provenance par rapport à l'obstacle de la base de donnée, mais aucun obstacle n'est modifié.

Ainsi, la présente invention propose de réussir à limiter la densité d'obstacles d'une base de données d'obstacles afin de permettre son exploitation par des fonctions embarquées de type TAWS, aux ressources limitées, existantes, déjà déployées et certifiées, et qui ne peuvent absorber la croissance constante des sources officielles d'obstacles.

Suivant d'autres aspects avantageux de l'invention, le procédé de réduction de la taille d'une base de données d'obstacles pour aéronef, comprend une ou plusieurs des caractéristiques suivantes, prises isolément ou suivant toutes les combinaisons techniquement possibles :
- ladite distance est orthodromique ;
- ledit score de dangerosité *D_{ref}* dudit obstacle considéré *O_{ref},* est exprimé via l'expression suivante : ${D}_{ref} = {Min}_{n \neq ref} \left[{D}_{ref / n}\right]$ avec *D*_{*ref*/*n*} la valeur de dangerosité associée à un couple d'obstacles comprenant ledit obstacle considéré *O_{ref}* et un autre obstacle *Oₙ* desdits N-1 obstacles distincts dudit obstacle considéré *O_{ref}*, telle que : ${D}_{ref / n} = Distance \left({O}_{ref}, {O}_{n}\right) - Altitude \left({O}_{n}\right) + Altitude \left({O}_{ref}\right) - Radius \left({O}_{n}\right) + Radius \left({O}_{ref}\right)$ où *Radius*(*Oₙ*) et *Radius*(*O_{ref}*) sont les rayons respectifs des obstacles *O_{ref}* et *Oₙ* dudit couple.
- chaque valeur de dangerosité associée à un couple d'obstacles comprenant ledit obstacle considéré et un autre obstacle desdits N-1 obstacles dépend en outre de la hauteur dudit autre obstacle dudit couple ;
- la valeur de dangerosité associée à un couple d'obstacles comprenant ledit obstacle considéré *O_{ref}* et un autre obstacle *Oₙ* desdits N-1 obstacles distincts dudit obstacle considéré *O_{ref}*, est alors telle que : ${D}_{ref / n} = Distance \left({O}_{ref}, {O}_{n}\right) - Altitude \left({O}_{n}\right) + Altitude \left({O}_{ref}\right) - Radius \left({O}_{n}\right) + Radius \left({O}_{ref}\right) + f \left({O}_{n}\right)$ avec *f*(*Oₙ*) une fonction configurée pour réduire la valeur de dangerosité lorsque la hauteur *H*(*Oₙ*) de l'autre obstacle *Oₙ* diminue ;
- ladite fonction *f*(*Oₙ*) est définie de la manière suivante : $f \left({O}_{n}\right) = 0 , si H \left({O}_{n}\right) > {H}_{1}$ $f \left({O}_{n}\right) = - ∞ , si H \left({O}_{n}\right) \leq {H}_{2}$ $f \left({O}_{n}\right) = k . {log}_{10} \left(H\left({O}_{n}\right)-{H}_{2}\right) , sinon ,$ avec *H*₁ et *H*₂ de seuils de hauteurs prédéterminés tels que *H*₂ < *H*₁ ;
- le seuil de hauteur *H*₁ est sensiblement égale à 150m et le seuil de hauteur *H*₂ est sensiblement égale à 50m.

L'invention concerne également un programme d'ordinateur comportant des instructions logicielles qui, lorsqu'elles sont exécutées par un ordinateur, mettent en œuvre un procédé de réduction de la taille d'une base de données d'obstacles pour aéronef tel que défini ci-dessus.

L'invention concerne également un support informatique lisible par ordinateur, comprenant une base de données obstacles pour un aéronef, la taille de la base de données d'obstacles ayant été réduite via un procédé de réduction tel que défini ci-dessus.

L'invention concerne également un dispositif électronique de réduction de la taille d'une base de données d'obstacles pour aéronef, ledit dispositif électronique étant configuré pour mettre en œuvre un tel procédé de réduction de la taille d'une base de données d'obstacles pour aéronef.

L'invention apparaîtra plus clairement à la lecture de la description qui va suivre, donnée uniquement à titre d'exemple non limitatif, et faite en référence aux dessins dans lesquels :
[Fig. 1] la figure 1, déjà décrite précédemment, illustre comment actuellement une seule éolienne ou une seule tour est propre à être représentée par une dizaine d'obstacles cylindriques au sein d'une base de données d'obstacles ;
[Fig. 2] la figure 2 est une vue schématique d'un dispositif électronique de réduction de la taille d'une base de données d'obstacles pour aéronef selon un mode de réalisation de l'invention ;
[Fig. 3] la figure 3 est un organigramme d'un procédé, selon l'invention, de réduction de la taille d'une base de données d'obstacles pour aéronef, le procédé étant mis en œuvre par le dispositif électronique de la figure 2 ;
[Fig.4] la figure 4 est une représentation schématique illustrant les différents paramètres pris en compte pour déterminer le score de dangerosité d'un obstacle selon un mode de réalisation de la présente invention ;
[Fig. 5] la figure 5 illustre deux exemples de réductions du nombre d'obstacles obtenus via la présente invention.

Dans la suite de la description, l'expression « sensiblement égale à » définit une relation d'égalité à plus ou moins 20%, de préférence à plus ou moins 10%, de préférence encore à plus ou moins 5%.
La figure 1 a déjà été décrite précédemment en relation avec l'art antérieur et ne sera donc plus décrite par la suite.

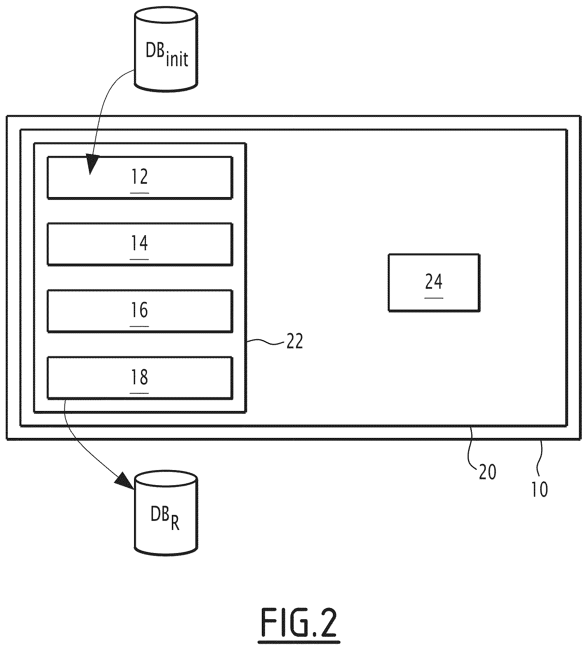

La figure 2 illustre ensuite schématiquement un exemple non limitatif d'un dispositif électronique 10 de réduction de la taille d'une base de données d'obstacles pour aéronef selon la présente invention.

Selon cet exemple de réalisation, le dispositif 10 électronique de réduction de la taille d'une base de données d'obstacles pour aéronef comprend tout d'abord un module 12 d'acquisition configuré pour acquérir une base initiale DBᵢₙᵢₜ de données d'obstacles, la base initiale DBᵢₙᵢₜ de données obstacles comprenant un nombre initial Nᵢₙᵢₜ d'obstacles associé à une zone géographique prédéterminée.

Le dispositif électronique 10 comprend en outre un premier module d'obtention 14 configuré pour obtenir, pour ladite zone géographique prédéterminée, une valeur maximale prédéterminée Nₘₐₓ d'obstacles (i.e. une limite du nombre maximal d'obstacles) associée à la capacité de traitement de données dudit système avionique.

Le dispositif électronique 10 comprend en outre un module 16 de détermination de score de dangerosité d'un obstacle et de suppression d'obstacle en fonction de la valeur de son score de dangerosité, ce module étant mise en œuvre itérativement jusqu'à ce que le nombre courant N d'obstacles de ladite base de données d'obstacles soit égal à ladite valeur maximale prédéterminée Nₘₐₓ d'obstacles, avec Nₘₐₓ ≤ N ≤ Nᵢₙᵢₜ, et à chaque itération configuré pour :
- pour chaque obstacle desdits N obstacles courants, déterminer un score de dangerosité dudit obstacle considéré, ledit score de dangerosité dudit obstacle considéré correspondant au minimum des valeurs de dangerosité obtenues pour ledit obstacle considéré par rapport à chaque autre obstacle desdits N-1 obstacles distincts dudit obstacle considéré, chaque valeur de dangerosité associée à un couple d'obstacles comprenant ledit obstacle considéré et un autre obstacle desdits N-1 obstacles dépendant au moins de :
   - la distance entre ledit obstacle considéré et ledit autre obstacle dudit couple ;
   - les altitudes et les rayons respectifs des obstacles dudit couple,
- au sein desdits N obstacles, supprimer l'obstacle ayant le score de dangerosité le plus faible, la valeur de N étant simultanément décrémentée de un.

Le dispositif électronique 10 comprend en outre un deuxième module d'obtention 18 configuré pour obtenir de la base de données d'obstacles de taille réduite DB_{R} propre à être ensuite embarquée au sein dudit système avionique, une fois que le nombre courant N d'obstacles de ladite base de données d'obstacles est égal à ladite valeur maximale prédéterminée Nₘₐₓ d'obstacles (i.e. a été réduit pas à pas à chaque itération pour passer du nombre initial Nᵢₙᵢₜ d'obstacles à valeur maximale prédéterminée Nₘₐₓ d'obstacles associée à la capacité de traitement de données dudit système avionique).

Dans l'exemple de la figure 2, le dispositif électronique de réduction de la taille d'une base de données d'obstacles pour aéronef comprend une unité 20 de traitement d'informations formée par exemple d'une mémoire 22 et d'un processeur 24 associé à la mémoire 22.

Dans l'exemple de la figure 2, le module d'acquisition, le premier module d'obtention, le module de détermination de score de dangerosité d'un obstacle et de suppression d'obstacle en fonction de la valeur de son score de dangerosité, le deuxième module d'obtention, sont réalisés chacun sous forme d'un logiciel, ou d'une brique logicielle, exécutable par le processeur. La mémoire du dispositif électronique de réduction de la taille d'une base de données d'obstacles pour aéronef est alors apte à stocker un logiciel d'acquisition, un premier logiciel d'obtention, et un logiciel de détermination de score de dangerosité d'un obstacle et de suppression d'obstacle en fonction de la valeur de son score de dangerosité, et un deuxième logiciel d'obtention. Le processeur est alors apte à exécuter chacun des logiciels parmi le premier logiciel d'obtention, le premier logiciel d'obtention, et le logiciel de détermination de score de dangerosité d'un obstacle et de suppression d'obstacle en fonction de la valeur de son score de dangerosité, et le deuxième logiciel d'obtention.

En variante non représentée, le module d'acquisition, le premier module d'obtention et le module de détermination de score de dangerosité d'un obstacle et de suppression d'obstacle en fonction de la valeur de son score de dangerosité, et le deuxième module d'obtention, sont réalisés chacun sous forme d'un composant logique programmable, tel qu'un FPGA (de l'anglais *Field Programmable Gate Array),* ou encore d'un circuit intégré, tel qu'un ASIC (de l'anglais *Application Specific Integrated Circuit).*

Lorsque le dispositif électronique de réduction de la taille d'une base de données d'obstacles pour aéronef est réalisé sous forme d'un ou plusieurs logiciels, c'est-à-dire sous forme d'un programme d'ordinateur, également appelé produit programme d'ordinateur, il est en outre apte à être enregistré sur un support, non représenté, lisible par ordinateur. Le support lisible par ordinateur est par exemple un medium apte à mémoriser des instructions électroniques et à être couplé à un bus d'un système informatique. A titre d'exemple, le support lisible est un disque optique, un disque magnéto-optique, une mémoire ROM, une mémoire RAM, tout type de mémoire non-volatile (par exemple FLASH ou NVRAM) ou une carte magnétique. Sur le support lisible est alors mémorisé un programme d'ordinateur comprenant des instructions logicielles.

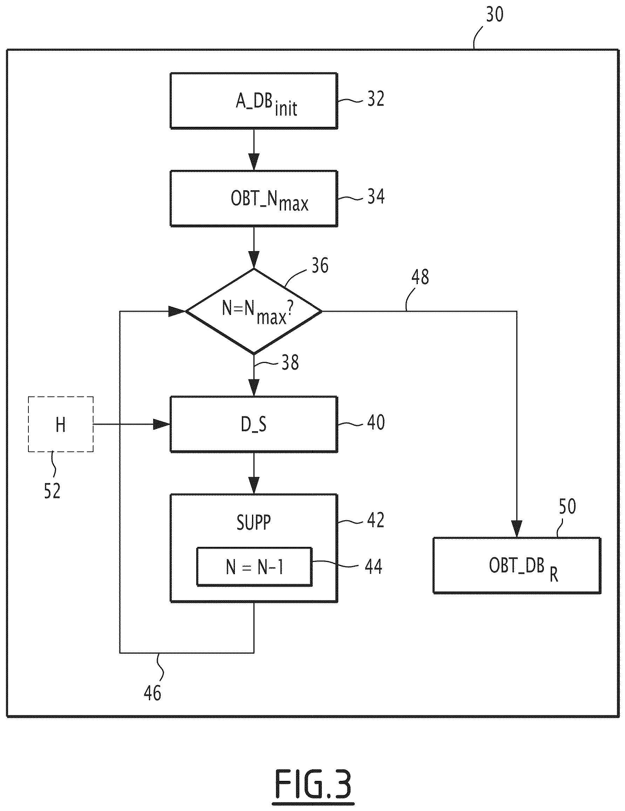

On décrit par la suite en relation avec la figure 3, un exemple de mode de réalisation général du fonctionnement du dispositif électronique 10 de la figure 2.

Plus précisément, le procédé 30 de réduction de la taille d'une base de données d'obstacles pour aéronef mis en œuvre par un tel dispositif électronique 10 comprend tout d'abord une étape 32 d'acquisition A_DBᵢₙᵢₜ d'une base initiale DBᵢₙᵢₜ de données d'obstacles, la base initiale de données obstacles comprenant un nombre initial Nᵢₙᵢₜ d'obstacles associé à une zone géographique prédéterminée.

Puis, selon une étape 34, le procédé 30 de réduction de la taille d'une base de données d'obstacles pour aéronef selon la présente invention comprend, pour ladite zone géographique prédéterminée, l'obtention OBT_Nₘₐₓ d'une valeur maximale prédéterminée Nₘₐₓ d'obstacles associée à la capacité de traitement de données dudit système avionique.

Puis, deux étapes sont mises en œuvre successivement au cours d'une pluralité d'itération jusqu'à ce que le nombre courant N d'obstacles de ladite base de données d'obstacles soit égal à ladite valeur maximale prédéterminée Nₘₐₓ d'obstacles.

A noter qu'au début de la première itération, le nombre courant N d'obstacles est égal au nombre initial Nᵢₙᵢₜ.

A chaque itération, selon une étape 36, il est tout d'abord testé si le nombre courant N d'obstacles de ladite base de données d'obstacles est égal ou non à ladite valeur maximale prédéterminée Nₘₐₓ d'obstacles.

Dans la négative selon la flèche 38, les étapes 40 à 44 sont alors mises en œuvre.

L'étape 40 consiste à mettre en œuvre, pour chaque obstacle desdits N obstacles courants, la détermination D_S d'un score de dangerosité dudit obstacle considéré, ledit score de dangerosité dudit obstacle considéré correspondant au minimum des valeurs de dangerosité obtenues pour ledit obstacle considéré par rapport à chaque autre obstacle desdits N-1 obstacles distincts dudit obstacle considéré, chaque valeur de dangerosité associée à un couple d'obstacles comprenant ledit obstacle considéré et un autre obstacle desdits N-1 obstacles dépendant au moins de :
- la distance entre ledit obstacle considéré et ledit autre obstacle dudit couple ;
- les altitudes et les rayons respectifs des obstacles dudit couple.

En effet, pour permettre au procédé selon la présente invention de supprimer les obstacles les moins dangereux, il faut définir numériquement le niveau de dangerosité, d'un point de vue opérationnel, de chaque obstacle. C'est-à-dire qu'il faut chiffrer le risque, pour un aéronef, de ne pas avoir connaissance de cet obstacle.

Selon la présente invention, ce score de danger dépend au premier ordre de la hauteur de l'obstacle, de son rayon, du fait qu'il est voisin ou non d'un obstacle plus conséquent (masquage), et ce en considérant une équiprobabilité dans les directions aéronef-obstacle.

A noter qu'en complément facultatif, ladite distance est orthodromique, ce qui permet avantageusement de prendre en compte la sphéricité de la planète.

Puis, une fois le score de dangerosité de chaque obstacle desdits N obstacles courants obtenus, selon l'étape 42, la suppression SUPP de l'obstacle ayant le score de dangerosité le plus faible est mise en œuvre, et selon l'étape 44 la valeur de N est simultanément ou successivement à ladite suppression, décrémentée de un.

Selon la flèche 46 de réitération, l'étape 36 selon laquelle il est testé si le nombre courant N d'obstacles de ladite base de données d'obstacles est égal ou non à ladite valeur maximale prédéterminée Nₘₐₓ d'obstacles, est réitérée avec la valeur de N précédemment décrémentée d'une unité lors de l'étape 44. Dans la négative, selon la flèche 38, tel que précédemment décrit les étapes 40 à 44 sont réitérées.

Dans l'affirmative, selon la flèche 48, c'est-à-dire une fois que le nombre courant N d'obstacles de ladite base de données d'obstacles est égal à ladite valeur maximale prédéterminée Nₘₐₓ d'obstacles, les itérations sont terminées et selon l'étape 50, il y a obtention OBT_DB_{R} de la base de données d'obstacles de taille réduite propre à être ensuite embarquée au sein dudit système avionique.

En complément facultatif, chaque valeur de dangerosité associée à un couple d'obstacles comprenant ledit obstacle considéré et un autre obstacle desdits N-1 obstacles dépend en outre de la hauteur T dudit autre obstacle dudit couple obtenue selon une étape 52.

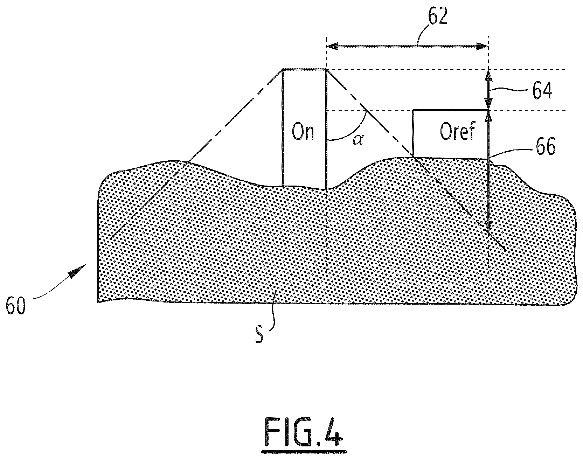

La figure 4 est une représentation 60 schématique illustrant les différents paramètres pris en compte pour déterminer le score de dangerosité d'un obstacle *O_{ref}* selon un mode de réalisation de la présente invention.

En effet, pour une zone géographique donnée contenant N obstacles courants (N étant égal à au nombre initial Nᵢₙᵢₜ), en complément facultatif, ledit score de dangerosité *D_{ref}* dudit obstacle considéré *O_{ref}*, est exprimé via l'expression suivante : ${D}_{ref} = {Min}_{n \neq ref} \left[{D}_{ref / n}\right]$ avec *D*_{*ref*/*n*} la valeur de dangerosité associée à un couple d'obstacles comprenant ledit obstacle considéré *O_{ref}* et un autre obstacle *Oₙ* desdits N-1 obstacles distincts dudit obstacle considéré *O_{ref}*, telle que : ${D}_{ref / n} = Distance \left({O}_{ref}, {O}_{n}\right) - Altitude \left({O}_{n}\right) + Altitude \left({O}_{ref}\right) - Radius \left({O}_{n}\right) + Radius \left({O}_{ref}\right)$ où *Radius*(*Oₙ*) et *Radius*(*O_{ref}*) sont les rayons respectifs des obstacles *O_{ref}* et *Oₙ* dudit couple.

Autrement dit, pour un obstacle *O_{ref}* donné, on évalue, à chaque itération, le danger qu'il représente en calculant son score de danger. Ce score se calcule en comparant *O_{ref}* à chacun des autres N-1 obstacles de la zone.

Sur la figure 4, l'obstacle considéré *O_{ref}* et un autre obstacle distinct *Oₙ* sont représentés, selon une coupe verticale, au sol S. La distance correspondant à l'expression : *Distance*(*O_{ref}, Oₙ*) *- Radius*(*Oₙ*) *+ Radius*(*O_{ref}*), est illustrée, sur la figure 4, par la double flèche horizontale 62, tandis que la différence d'altitude *Altitude*(*Oₙ*) *- Altitude*(*O_{ref}*), est représentée, sur la figure 4, par la double flèche verticale 64.

*D*_{*ref*/*n*} la valeur de dangerosité associée à un couple d'obstacles est quant à elle représentée sur la figure 4, par la double flèche verticale 66, et représente la distance dont *O_{ref}* dépasse d'un cône de sommet *Oₙ* et de pente α. Par exemple, α est sensiblement égal à 45°.

Le score global *D_{ref}* est le score de danger minimum de *O_{ref}* par rapport à tous ses obstacles voisins. Si ce score *D_{ref}* est faible, cela signifie que *O_{ref}* est « protégé » par un de ses voisins et qu'il peut être retiré sans risque. Si le score *D_{ref}* est au contraire élevé, cela signifie qu'*O_{ref}* est loin de ses voisins ou bien qu'il est plus haut en altitude et qu'il est risqué de le retirer.

Ainsi, la prise en compte, selon l'invention, du terme *distance*(*O_{ref}, Oₙ*) a pour effet de favoriser la suppression d'obstacles appartenant à des "clusters" et de favoriser la préservation des obstacles isolés. Cela aide à la simplification des grappes d'obstacles, par exemple lorsque de grands bâtiments ont été modélisés à l'aide de nombreux obstacles de faibles rayons.
la prise en compte, selon l'invention, de la différence *Altitude*(*O_{ref}*) *- Altitude*(*Oₙ*) privilégie la suppression des obstacles les moins élevés. Lorsqu'une grappe d'obstacles sera présente, l'algorithme va préserver le plus élevé du groupe.
la prise en compte, selon l'invention, de la différence *Radius*(*O_{ref}*) - *Radius*(*Oₙ*) favorise la suppression des obstacles les moins larges lorsque les hauteurs des obstacles voisins sont du même ordre.

Comme indiqué précédemment en relation avec la figure 2, optionnellement, chaque valeur de dangerosité associée à un couple d'obstacles comprenant ledit obstacle considéré et un autre obstacle desdits N-1 obstacles dépend en outre de la hauteur dudit autre obstacle dudit couple.

En effet, il peut être intéressant de faire intervenir l'élévation du terrain et donc la hauteur de l'obstacle dans l'évaluation du danger. La protection contre la collision des obstacles étant toujours accompagnée d'une protection équivalente sur le terrain, il est donc inutile de conserver des obstacles dont la hauteur est si faible qu'aucun aéronef ne pourra l'approcher sans déclencher une alerte terrain.

Une telle option, à savoir la prise en compte complémentaire de la hauteur, permet avantageusement de plus facilement supprimer les obstacles proches du sol, quelle que soit leur altitude.

Selon cette option, la valeur de dangerosité associée à un couple d'obstacles comprenant ledit obstacle considéré *O_{ref}* et un autre obstacle *Oₙ* desdits N-1 obstacles distincts dudit obstacle considéré *O_{ref}*, est alors telle que : ${D}_{ref / n} = Distance \left({O}_{ref}, {O}_{n}\right) - Altitude \left({O}_{n}\right) + Altitude \left({O}_{ref}\right) - Radius \left({O}_{n}\right) + Radius \left({O}_{ref}\right) + f \left({O}_{n}\right)$ avec *f*(*Oₙ*) une fonction configurée pour réduire la valeur de dangerosité lorsque la hauteur *H*(*Oₙ*) de l'autre obstacle *Oₙ* diminue.

Selon une variante de cette option, ladite fonction *f*(*Oₙ*) est définie de la manière suivante : $f \left({O}_{n}\right) = 0 , si H \left({O}_{n}\right) > {H}_{1}$ $f \left({O}_{n}\right) = - ∞ , si H \left({O}_{n}\right) \leq {H}_{2}$ $f \left({O}_{n}\right) = k . {log}_{10} \left(H\left({O}_{n}\right)-{H}_{2}\right) , sinon ,$ avec *H*₁ et *H*₂ de seuils de hauteurs prédéterminés tels que *H*₂ < *H*₁*.*

En complément facultatif de cette option, le seuil de hauteur *H*₁ est sensiblement égale à 150m et le seuil de hauteur *H*₂ est sensiblement égale à 50m, ce qui correspond à l'exemple selon lequel on considère que les obstacles de 30m où moins ne sont pas dangereux et que ceux de 150m ou plus ne sont plus protégés par le terrain.

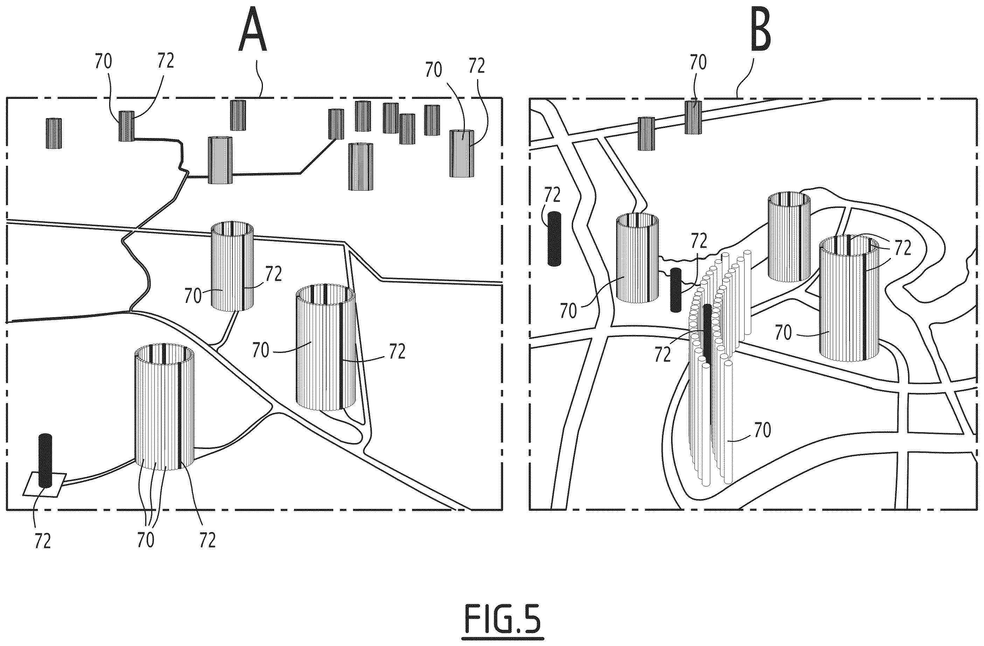

La figure 5 illustre deux exemples de réductions du nombre d'obstacles obtenus via la présente invention. Sur les vues A et B de la figure 5, associées respectivement à différente zones géographiques, les obstacles 70 représentés en blanc sont avantageusement supprimés pas à pas pour ne conserver, à l'issue du procédé itératif selon la présente invention, que les obstacles 72 représentés en noir.

Par exemple, le procédé selon la présente invention permet de réduire le nombre d'obstacles initial Nᵢₙᵢₜ égal à 2500 obstacles jusqu'au nombre Nₘₐₓ égal à 300 obstacles, soit une réduction du nombre d'obstacles par un facteur 8.

Les résultats des vues A et B illustrent que le procédé selon la présente invention, conserve un obstacle 72 représentatif en hauteur des obstacles environnants.

En outre, la vue A illustre que le procédé selon la présente invention a pour effet de simplifier les grappes d'obstacles initiales, et la vue B illustre que le procédé selon la présente invention tient compte de la répartition spatiale des obstacles

L'homme du métier comprendra que l'invention ne se limite pas aux modes de réalisation décrits, ni aux exemples particuliers de la description, les modes de réalisation et les variantes mentionnées ci-dessus étant propres à être combinés entre eux pour générer de nouveaux modes de réalisation de l'invention.

La présente invention permet ainsi de fournir une suppression d'obstacles « intelligente » sur des critères de dangerosité dans un contexte aéronautique « aéronef » voire plus précisément « avion », et ce tout en étant agnostique du cap aéronef-obstacle.

## Revendications

1. Procédé (30) de réduction de la taille d'une base de données d'obstacles pour aéronef, la base de donnée d'obstacles étant configurée pour être utilisée par un système avionique, chaque obstacle étant modélisé par un cylindre, vertical par rapport au sol, défini par son rayon, sa hauteur, et l'altitude de sa surface supérieure, le procédé étant mis en oeuvre par un dispositif électronique de réduction, et comprenant les étapes suivantes :
- acquisition (32) d'une base initiale de données d'obstacles, la base initiale de données obstacles comprenant un nombre initial Nᵢₙᵢₜ d'obstacles associé à une zone géographique prédéterminée ;
- pour ladite zone géographique prédéterminée, obtention (34) d'une valeur maximale prédéterminée Nₘₐₓ d'obstacles associée à la capacité de traitement de données dudit système avionique ;
et jusqu'à ce que le nombre courant N d'obstacles de ladite base de données d'obstacles soit égal à ladite valeur maximale prédéterminée Nₘₐₓ d'obstacles, avec Nₘₐₓ ≤ N ≤ Nᵢₙᵢₜ, réitération des étapes suivantes :
- pour chaque obstacle desdits N obstacles courants, détermination (40) d'un score de dangerosité dudit obstacle considéré, ledit score de dangerosité dudit obstacle considéré correspondant au minimum des valeurs de dangerosité obtenues pour ledit obstacle considéré par rapport à chaque autre obstacle desdits N-1 obstacles distincts dudit obstacle considéré, chaque valeur de dangerosité associée à un couple d'obstacles comprenant ledit obstacle considéré et un autre obstacle desdits N-1 obstacles dépendant au moins de :
- la distance entre ledit obstacle considéré et ledit autre obstacle dudit couple ;
- les altitudes et les rayons respectifs des obstacles dudit couple,
- au sein desdits N obstacles, suppression (42) de l'obstacle ayant le score de dangerosité le plus faible, la valeur de N étant, simultanément ou successivement à ladite suppression, décrémentée de un,
et une fois que le nombre courant N d'obstacles de ladite base de données d'obstacles est égal à ladite valeur maximale prédéterminée Nₘₐₓ d'obstacles, obtention (50) de la base de données d'obstacles de taille réduite propre à être ensuite embarquée au sein dudit système avionique.

2. Procédé (30) selon la revendication 1, dans lequel ladite distance est orthodromique.

3. Procédé (30) selon la revendication 2, dans lequel ledit score de dangerosité *D_{ref}* dudit obstacle considéré *O_{ref}*, est exprimé via l'expression suivante : ${D}_{ref} = {Min}_{n \neq ref} \left[{D}_{ref / n}\right]$ avec *D*_{*ref*/*n*} la valeur de dangerosité associée à un couple d'obstacles comprenant ledit obstacle considéré *O_{ref}* et un autre obstacle *Oₙ* desdits N-1 obstacles distincts dudit obstacle considéré *O_{ref}*, telle que : ${D}_{ref / n} = Distance \left({O}_{ref}, {O}_{n}\right) - Altitude \left({O}_{n}\right) + Altitude \left({O}_{ref}\right) - Radius \left({O}_{n}\right) + Radius \left({O}_{ref}\right)$ où *Radius*(*Oₙ*) et *Radius*(*O_{ref}*) sont les rayons respectifs des obstacles *O_{ref}* et *Oₙ* dudit couple.

4. Procédé (30) selon l'une quelconque des revendications précédentes, dans lequel chaque valeur de dangerosité associée à un couple d'obstacles comprenant ledit obstacle considéré et un autre obstacle desdits N-1 obstacles dépend en outre de la hauteur dudit autre obstacle dudit couple.

5. Procédé (30) selon la revendication 4, dans lequel la valeur de dangerosité associée à un couple d'obstacles comprenant ledit obstacle considéré *O_{ref}* et un autre obstacle *Oₙ* desdits N-1 obstacles distincts dudit obstacle considéré *O_{ref}*, est alors telle que : ${D}_{ref / n} = Distance \left({O}_{ref}, {O}_{n}\right) - Altitude \left({O}_{n}\right) + Altitude \left({O}_{ref}\right) - Radius \left({O}_{n}\right) + Radius \left({O}_{ref}\right) + f \left({O}_{n}\right)$ avec *f*(*Oₙ*) une fonction configurée pour réduire la valeur de dangerosité lorsque la hauteur *H*(*Oₙ*) de l'autre obstacle *Oₙ* diminue.

6. Procédé (30) selon la revendication 5, dans lequel ladite fonction *f*(*Oₙ*) est définie de la manière suivante : $f \left({O}_{n}\right) = 0 , si H \left({O}_{n}\right) > {H}_{1}$ $f \left({O}_{n}\right) = - ∞ , si H \left({O}_{n}\right) \leq {H}_{2}$ $f \left({O}_{n}\right) = k . {log}_{10} \left(H\left({O}_{n}\right)-{H}_{2}\right) , sinon ,$ avec *H*₁ et *H*₂ de seuils de hauteurs prédéterminés tels que *H*₂ < *H*₁*.*

7. Procédé (30) selon la revendication 6, dans lequel le seuil de hauteur *H*₁ est sensiblement égale à 150m et le seuil de hauteur *H*₂ est sensiblement égale à 50m.

8. Programme d'ordinateur comportant des instructions logicielles qui, lorsqu'elles sont exécutées par un ordinateur, mettent en œuvre un procédé selon l'une quelconque des revendications précédentes.

9. Support informatique lisible par ordinateur, comprenant une base de données d'obstacles pour un aéronef, **caractérisé en ce que** la taille de la base de données d'obstacles a été réduite via un procédé selon la revendication selon l'une quelconque des revendications précédentes.

10. Dispositif électronique (10) de réduction de la taille d'une base de données d'obstacles pour aéronef, le dispositif électronique étant configuré pour mettre en œuvre un procédé selon l'une quelconque des revendications 1 à 7.
